# EUROPÄISCHE PATENTSCHRIFT

(11) **EP 2 389 298 B1**
(45) Veröffentlichungstag und Bekanntmachung des Hinweises auf die Patenterteilung: **28.11.2012**
(21) Anmeldenummer: 09796329.2
(22) Anmeldetag: 23.12.2009
(51) Int. Cl.: B60G 21/055, B60G 17/02, B60G 11/18, B60G 17/016

(54) **ANORDNUNG EINES STABILISATORS AN EINER RADAUFHÄNGUNG FÜR KRAFTFAHRZEUGE**
ARRANGEMENT OF A STABILIZER ON A WHEEL SUSPENSION FOR MOTOR VEHICLES
DISPOSITIF DE STABILISATEUR SUR UNE SUSPENSION DE ROUE DE VÉHICULE MOTORISÉ

(30) Priorität: 23.01.2009 DE 102009005899
(43) Veröffentlichungstag der Anmeldung: 30.11.2011
(73) Patentinhaber: Audi AG, 85045 Ingolstadt (DE)
(72) Erfinder: OHLETZ, Armin, 85092 Kösching (DE); SCHMIDT, Walter, 86643 Rennertshofen (DE)
(74) Vertreter: Asch, Konrad
(86) Internationale Anmeldenummer: PCT/EP2009/009236
(87) Internationale Veröffentlichungsnummer: WO 2010/083875

(56) Entgegenhaltungen:
- EP-A1- 1 958 804
- DE-A1- 10 126 928
- DE-A1- 10 242 552
- DE-A1-102004 002 550
- JP-A- 2006 082 751
- JP-A- 2008 302 731
- US-A1- 2005 167 932

## Beschreibung

Die Erfindung betrifft eine Anordnung eines Stabilisators an einer Radaufhängung für Kraftfahrzeuge gemäß dem Oberbegriff des Patentanspruches 1.

Anordnungen von zweigeteilten Stabilisatoren mit einer Stellvorrichtung zum Beeinflussen der Federraten und der Fahreigenschaften von Kraftfahrzeugen sind beispielsweise die DE 101 26 928 A1, DE 10 2004 002 550 A1, oder die DE 102 42 552 B4 bekannt. Dabei kann durch gegensinniges Verstellen der geteilten Torsionsstäbe des insgesamt U-förmigen Stabilisators das Wankverhalten beziehungsweise die Kurvenneigung des Kraftfahrzeuges verringert oder durch gleichsinniges Verstellen der Nickneigung zum Beispiel beim Bremsen entgegengewirkt werden.

Aus der DE 10 2007 007 214 A1 ist eine gattungsgemäße Anordnung eines solchen zweiteilig ausgeführten Stabilisators bekannt. Dessen Stabilisatorteile sind jeweils mittels einer Motor/Getriebe-Einheit ansteuerbar und zueinander verdrehbar. Jedes der Stabilisatorteile weist einen äußeren Hohlstab auf, dessen getriebeseitiges Ende mit dem Getriebeausgang der Motor/GetriebeEinheit verbunden ist. Das getriebeferne Ende des Hohlstabes ist trieblich mit einem durch den Hohlstab und aus dessen getriebeseitiges Ende herausgeführten inneren Vollstab verbunden. Der innere Vollstab trägt mittelbar oder unmittelbar einen Abtriebshebel, der an einem Radaufhängungselement angelenkt ist.

Die Stabilisatorteile sind während einer aktiven Einstellung des Wank-, Nick- oder des Eigenlenkverhaltens hohen Torsionsbeanspruchungen ausgesetzt. Solche Torsionsbeanspruchungen können durch eine Durchmesservergrößerung des jeweiligen Stabilisatorteiles reduziert werden. Die wirksame Federlänge des Stabilisatorteiles entspricht der Länge eines Lastpfades, der sich vom Getriebeausgang der Motor/Getriebe-Einheit über den Hohlstab sowie den darin geführten Vollstab bis zum Abtriebshebel erstreckt und ein Stellmoment auf das Radaufhängungselement überträgt.

Die Aufgabe der Erfindung besteht darin, eine Anordnung eines zweiteilig ausgeführten Stabilisators an einer Radaufhängung eines Kraftfahrzeugs bereitzustellen, bei dem die betriebsbedingten torsionalen Spannungen in den Stabilisatorenteilen reduziert sind.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 ist für jeden der Stabilisatorteile die axiale Anordnung der Motor/Getriebe-Einheit sowie des Abtriebshebels derart gewählt, dass das Getriebe mit seinem Getriebeausgang in Fahrzeugquerrichtung zwischen dem Stellmotor und dem Abtriebshebel angeordnet ist. Auf diese Weise ist das Getriebe mit seinem Getriebeausgang in Axialrichtung des Stabilisatorteiles näher an dessen Abtriebshebel herangeführt, und zwar im Vergleich zu einer axialen Anordnung, bei der das Getriebe mit zugehörigem Getriebeausgang auf der vom Abtriebshebel abgewandten Seite des Stellmotors angeordnet ist. Erfindungsgemäß kann somit die Länge des mit dem Getriebeausgang verbundenen, hohlzylindrischen äußeren Torsionsstabes verlängert werden, ohne die Gesamt-Baulänge des Stabilisatorteiles in Fahrzeugquerrichtung zu vergrößern. Eine solche Vergrößerung der Stabilisatorteile in Fahrzeugquerrichtung würde zu Bauraumproblemen führen.

Die in der Fahrzeugmitte einander zugewandten Stabilisatorteil-Enden müssten in einem solchen Fall aufwendig zueinander verschränkt gestaltet werden.

Die Motor/Getriebe-Einheit kann koaxial zur Torsionsachse des Stabilisatorteiles angeordnet sein. In diesem Fall kann das jeweilige Stabilisatorteil mittig durch die Getriebe/Stellmotor-Einheit geführt werden.

Der mit dem Getriebeausgang verbundene hohlzylindrische äußere Torsionsstab, d.h. der Hohlstab, wirkt in dem Stabilisatorteil als eine erste Torsionsfeder, die in Reihe zum rückgeführten inneren Torsionsstab geschaltet ist, der als eine zweite Torsionsfeder des Stabilisatorteiles wirkt. Um eine zusätzliche gezielte Nachgiebigkeit des Stabilisatorteiles zu erreichen, kann der innere Torsionsstab mit seinem aus dem Hohlstab herausgeführten Ende trieblich mit einem weiteren hohlzylindrischen äußeren Torsionsstab verbunden sein, der als dritte Torsionsfeder wirkt. Dieser kann als Abtriebshülse den Abtriebshebel tragen und wieder in Richtung auf das Getriebe zurückgeführt sein. Auf diese Weise ergibt sich eine verschachtelte Anordnung bestehend aus zwei Hohlstäben mit darin geführtem inneren Vollstab.

Das jeweilige Stabilisatorteil kann im Bereich des Übergangs zum Abtriebshebel an einer aufbauseitigen oder an der Getriebe/Stellmotor-Einheit vorgesehenen Lagerstelle drehbar gelagert sein. In diesem Fall können die bei einer Verstellbetätigung von dem Radführungselementen auf die Stabilisatorteile wirkenden Biegemomente zum großen Teil von der Lagerstelle aufgenommen werden, während die Motor/Getriebe-Einheit lediglich mit Torsionsmomenten beaufschlagt werden.

Bauraumgünstig ist es, wenn die Lagerstelle unmittelbar in einem Gehäuse der Stellmotor/Getriebe-Einheit ausgebildet ist. Auf diese Weise kann der Getriebeausgang und damit das getriebeseitige Ende des hohlzylindrischen äußeren Torsionsstabes noch näher an dem Abtriebshebel herangeführt werden.

Zur weiteren Vergrößerung der wirksamen Federlänge kann das Stabilisatorteil über den Abtriebshebel hinaus mit einer Überstandlänge in der Fahrzeugquerrichtung in Richtung auf das Fahrzeugrad verlängert sein. Das Stabilisatorteil kann somit bis unmittelbar an das Fahrzeugrad herangeführt sein, wobei in diesem Fall lediglich ein erforderlicher Freiraum des Fahrzeugrades bei der Bemessung der Überstandlänge berücksichtigt werden muss.

Für eine weitere Steigerung der Nachgiebigkeit des Stabilisatorteiles kann zusätzlich und/oder alternativ zu den vorangegangenen Ausführungsformen der Abtriebshebel nicht als ein steifes Element, sondern als ein Federelement mit vorgegebener Federhärte ausgeführt sein. Das Abtriebselement kann bevorzugt nach Art einer Blattfeder zwischen den Stabilisatorteil und dem Radaufhängungselement geschaltet sein.

Ein Ausführungsbeispiel der Erfindung ist nachfolgend näher erläutert. Es zeigen:
- **Fig. 1**: eine Heckansicht einer hinteren Radaufhängung mit einem zweigeteilten Stabilisator und zwei elektromechanischen Stellvorrichtungen, wobei die Torsionsstäbe des Stabilisators baulich in einen Vollstab aufgeteilt sind; und
- **Fig. 2**: einen Mittel-Längsschnitt durch einen Torsionsstab der Stabilisatoranordnung gemäß **Fig.** 1 mit einer koaxial ausgerichteter Stellvorrichtung.

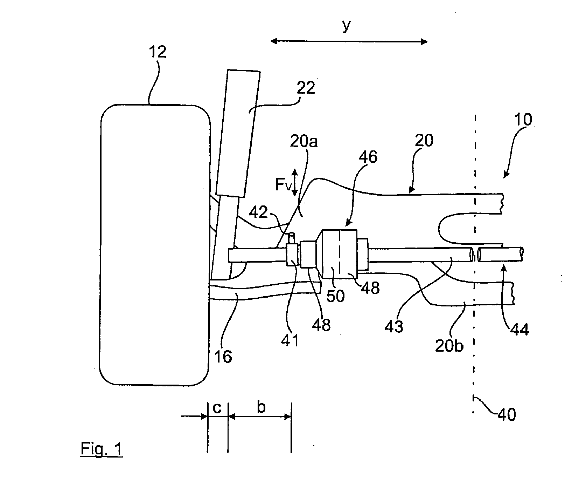

Die **Fig. 1** zeigt grob schematisch eine hintere Radaufhängung 10 für die hinteren Räder 12 eines Kraftfahrzeuges, die radführende Lenker aufweist, von denen in der **Fig. 1** beispielhaft nur ein unterer Trapezlenker 16 gezeigt ist. Der Trapezlenker 16 ist radseitig an einem Radträger (nicht ersichtlich) und aufbauseitig an einem Hilfsrahmen 20 schwenkbar angelenkt. Der Hilfsrahmen 20 weist zwei seitliche Längsträger 20a und zwei Querträger 20b auf und ist in nicht dargestellter Weise am Aufbau des Kraftfahrzeuges über dämpfende Lager befestigt. Die in der **Fig. 1** gezeigte Anordnung ist lediglich geringfügig bis über die Mittelebene 40 hinaus dargestellt.

Ferner sind je ein Stoßdämpfer 22 und eine nicht gezeigte Tragfeder zwischen dem unteren Trapezlenker 16 und dem Aufbau des Kraftfahrzeuges in bekannter Weise angeordnet. Die Radaufhängung 10 kann in modifizierter Form auch als Radaufhängung für die vorderen, gelenkten Räder eines Kraftfahrzeuges ausgelenkt sein.

Des weiteren ist an der Radaufhängung 10 ein im wesentlichen U-förmiger, zweiteilig ausgeführter Stabilisator 44 über Lagerstellen 53 drehbar gelagert, dessen im Wesentlichen im Fahrzeuglängsrichtung verlaufende Abtriebshebel 41 an dem unteren Lenker 16 der Radaufhängung 10 angelenkt sind. Der Abtriebshebel 41 kann im Betrieb eine Verstellkraft F_{V} über den Anlenkpunkt 42 auf den unteren Lenker 16 übertragen.

In den beiden Figuren sind lediglich die linksseitigen Stabilisatorteile 43 des Stabilisators 44 gezeigt. Die rechtsseitigen Stabilisatorteile können baugleich ausgebildet sein.

Der zweigeteilt ausgeführte Stabilisator 44 ist hinsichtlich seiner Wirkung auf die Lenker 16 mittels zweier elektromechanischer Stellvorrichtungen 46 verstellbar, die sich aus je einem Elektromotor 48 und einem beispielsweise selbsthemmenden Untersetzungsgetriebe 50 zusammensetzen.

Das Untersetzungsgetriebe 50 und der Elektromotor 48 sind dabei jeweils koaxial zu den im Wesentlichen quer verlaufenden Stabilisatorteilen 43 des Stabilisators 44 ausgerichtet.

Die quer verlaufenden Stabilisatorteile 43 des etwa in der senkrechten Fahrzeug-Längsmittelebene 40 geteilten Stabilisators 44 werden über die Motor/Betriebe-Einheiten 46 verstellt.

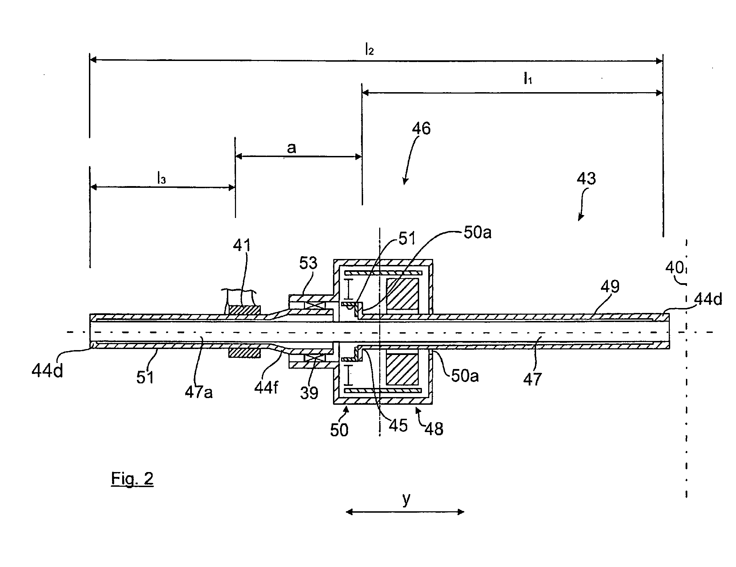

Ein jedes der Stabilisatorteile 43 des Stabilisators 44 ist im Detail entsprechend der Fig. 2 (nicht dargestellte Anordnung spiegelbildlich) ausgeführt:
So ist der Stabilisatorteil 43 aus einem Vollstab 47 und einem radial äußeren, rohrförmigen Hohlstab 49 ausgeführt. Die beiden Stäbe 47, 49 sind aus Federstahl und dementsprechend tordierbar hergestellt. Der Hohlstab 49 kann gegebenenfalls ein offenes Querschnittsprofil ausweisen.

Der Hohlstab 49 ist mit seinem getriebeseitigen Ende 45 trieblich zum Beispiel mittels einer Flanschverbindung 50a mit dem Ausgang des Untersetzungsgetriebes 50, etwa einem Hohlrad 51, verbunden und verläuft von diesem durch den Elektromotor 48 hindurch bis etwa zur Fahrzeugmitte 40. Dessen wirksame Federlänge ist in der Fig. 2 mit I₁ angedeutet. Am getriebefernen Ende ist der Hohlstab 49 über eine Keilverzahnung 44d mit dem Vollstab 47 drehfest verbunden.

Der Vollstab 47 verläuft nunmehr gegensinnig über eine zweite wirksame Federlänge I₂ in Richtung Fahrzeugaußenseite durch den Hohstab 49, durch den koaxial ausgerichteten Elektromotor 48 sowie durch das Untersetzungsgetriebe 50 - ein sogenanntes Harmonic-Drive-Getriebe.

Der Vollstab 47 verläuft ferner weiterführend mit einem Abschnitt 47 frei über die Anbindungsstelle des Abtriebshebels 41 hinaus und endet mit einer weiteren Keilverzahnung 44d, über die er wiederum mit einer rückführenden Hohlwelle 51 trieblich verbunden ist. Die rückführende Hohlwelle 51 erstreckt sich über eine dritte wirksame Federlänge I₃. Daraus ergibt sich insgesamt ein Lastpfad, der sich vom Getriebeausgang 50a über die wirksamen Federlängen I₁, I₂, I₃ der Hohlwellen 49, 51 sowie des Vollstabes 47 bis zum Abtriebshebel 41 erstreckt.

Die Hohlwelle 51 trägt wie ersichtlich den Abtriebshebel 41 und ist benachbart dazu mit einem angeformten Lagerhals 44f und über ein Nadellager 39 unmittelbar in einem Gehäuseabschnitt 48a des Getriebes 50 drehbar gelagert.

Wie aus den **Fig. 1** **und** **2** ersichtlich ist, sind der Stabilisator 44 beziehungsweise dessen Stabilisatorteile 43 und die Motor/Getriebe-Einheit 46 koaxial und in geradliniger Ausrichtung ausgeführt.

Wie aus den beiden **Fig. 1** **und** **2** hervorgeht, ist die axiale Anordnung bestehend aus dem Abtriebshebel 41 und der Motor/Getriebe-Einheit 46 derart gestaltet, dass das Getriebe 50 mit seinem Getriebeausgang 50a in der Fahrzeugquerrichtung y zwischen dem Stellmotor 48 und dem Abtriebshebel 41 angeordnet ist. Auf diese Weise ist das getriebeseitige Ende 45 des Hohlstabes 49 weitestgehend bis an den Abtriebshebel 41 herangeführt. Der Axialabstand a zwischen dem Abtriebshebel 41 und dem getriebeseitigen Ende 45 des Hohlstabes 49 ist daher auf eine minimale Baulänge reduziert, in der lediglich Bauraum für die Lagerstelle 53 verbleibt. Entsprechend verlängert ist daher die wirksame Federlänge I₁ des Hohlstabes 49, wodurch insgesamt die Nachgiebigkeit des Stabilisatorteiles 43 gesteigert ist und dessen Torsionsbelastung reduziert ist.

Wie aus der **Fig.1** 1 weiter hervorgeht, ragt das Stabilisatorteil 43 mit einer Überstandlänge b in Fahrzeugquerrichtung y über die Abtriebshebel-Lagerung hinaus. Die Überstandlänge b des Stabilisatorteiles 43 ist dabei so bemessen, dass der gesamte Bauraum zwischen dem Abtriebshebel 41 und dem Fahrzeugrad 12 abzüglich eines erforderlichen Freigangs c ausgenutzt wird, der für eine Sturz-/Spurwinkeleinstellung des Fahrzeugrades 12 benötigt wird. Somit sind auch die wirksamen Federlänge I₂ des Vollstabes 47 und die wirksame Federlänge I₃ der rückgeführten Hohlwelle 51 weitestgehend verlängert. Die Weichheit des Stabilisatorteiles 43 kann zusätzlich gesteigert werden, wenn der Abtriebshebel 41 als zusätzliches Federelement ausgeführt ist.

## Patentansprüche

1. Anordnung eines zweiteilig ausgeführten Stabilisators (44) an einer Radaufhängung eines Kraftfahrzeugs, dessen Stabilisatorteile (43) jeweils mittels einer zugeordneten Motor/Getriebe-Einheit (46) gleich- oder gegensinnig zueinander verdrehbar sind, wobei jedes Stabilisatorteil (43) einen hohlzylindrischen äußeren Torsionsstab (49) aufweist, dessen getriebeseitiges Ende (45) mit einem Getriebeausgang (50a) verbunden ist und dessen getriebefernes Ende trieblich mit einem durch den hohlzylindrischen äußeren Torsionsstabs (49) und aus dessen getriebeseitiges Ende (45) herausgeführten inneren Torsionsstab (47) verbunden ist, der unmittelbar oder mittelbar mit einem Abtriebshebel (41) verbunden ist, der an einem Radaufhängungselement (16) angelenkt ist, **dadurch gekennzeichnet, dass** das Getriebe (50) der Motor/Getriebe-Einheit (46) mit seinem Getriebeausgang (50a) in Fahrzeugquerrichtung (y) zwischen dem Stellmotor (48) und dem Abtriebshebel (41) angeordnet ist.

2. Anordnung nach Anspruch 1, **dadurch gekennzeichnet, dass** der Stellmotor (48) und das Getriebe (50) jeweils koaxial zur Torsionsachse des Stabilisatorteils (43) angeordnet sind, und/oder das Stabilisatorteil (43) durch das Getriebe (50) und dem Stellmotor (48) geführt ist.

3. Anordnung nach Anspruch 1 oder 2, **dadurch gekennzeichnet, dass** der innere Torsionsstab (47) mit seinem aus dem hohlzylindrischen äußeren Torsionsstab (49) herausgeführten Ende trieblich mit einem in Richtung Getriebe (50) rückgeführten hohlzylindrischen äußeren Torsionsstab (51) verbunden ist, der den Abtriebshebel (41) trägt.

4. Anordnung nach Anspruch 1, 2 oder 3, **dadurch gekennzeichnet, dass** das Stabilisatorteil (43) im Bereich des Übergangs zum Abtriebshebel (41) an einer Lagerstelle (53) drehbar gelagert ist.

5. Anordnung nach Anspruch 4, **dadurch gekennzeichnet, dass** die Lagerstelle (53) unmittelbar in einem Gehäuse der Motor/GetriebeEinheit (46) ausgebildet ist.

6. Anordnung nach einem der Ansprüche 3, 4 oder 5, **dadurch gekennzeichnet, dass** das Stabilisatorteil (43) mit einer Überstandlänge (b) in der Fahrzeugquerrichtung (y) in Richtung auf das Fahrzeugrad (12) über den Abtriebshebel (41) hinaus verlängert ist.

7. Anordnung nach Anspruch 6, **dadurch gekennzeichnet, dass** die Überstandlänge (b) des Stabilisatorteils (43) dem Abstand zwischen dem Antriebshebel (41) und dem Fahrzeugrad (12) in dessen Neutrallage abzüglich eines erforderlichen Freigangs (c) für das Fahrzeugrad (12) entspricht.

8. Anordnung insbesondere nach einem der vorhergehenden Ansprüche, **dadurch gekennzeichnet, dass** der Abtriebshebel (41) des Stabilisatorteils (43) als ein zusätzliches Federelement, etwa als eine Blattfeder, ausgebildet ist.

## Claims

1. Arrangement of a two-part stabiliser (44) on a wheel suspension of a motor vehicle, the stabiliser parts (43) thereof being rotatable with respect to each other in the same direction or in opposite directions by a motor/gear unit (46) associated therewith, each stabiliser part (43) having a hollow-cylindrical outer torsion rod (49), the gear-proximal end (45) of which is connected to a gear output (50a), and the gear-distal end of which is drivingly connected to an inner torsion rod (47) which is guided through the hollow-cylindrical outer torsion rod (49) and exits the gear-proximal end (45) thereof, said inner torsion rod being connected directly or indirectly to a driven lever (41) which is articulated to a wheel suspension element (16), **characterised in that** the gear (50) of the motor/gear unit (46), together with its gear output (50a), is arranged between the actuator motor (48) and the driven lever (41) in a transverse direction (y) of the vehicle.

2. Arrangement according to claim 1, **characterised in that** the actuator motor (48) and the gear (50) are each arranged coaxially with respect to the torsion axis of the stabiliser part (43) and/or the stabiliser part (43) is guided through the gear (50) and the actuator motor (48).

3. Arrangement according to claim 1 or claim 2, **characterised in that** the end of the inner torsion rod (47) exiting the hollow-cylindrical outer torsion rod (49) is drivingly connected to a hollow-cylindrical outer torsion rod (51) which is returned towards the gear (50) and supports the driven lever (41).

4. Arrangement according to claim 1, 2 or 3, **characterised in that**, in the transition region to the driven lever (41), the stabiliser part (43) is rotatably mounted on a bearing (53).

5. Arrangement according to claim 4, **characterised in that** the bearing (53) is formed directly in a housing of the motor/gear unit (46).

6. Arrangement according to any of claims 3, 4 or 5, **characterised in that** the stabiliser part (43) is extended by a projecting length (b) beyond the driven lever (41) towards the vehicle wheel (12) in the transverse direction (y) of the motor vehicle.

7. Arrangement according to claim 6, **characterised in that** the projecting length (b) of the stabiliser part (43) corresponds to the distance between the driven lever (41) and the vehicle wheel (12) in the neutral position thereof minus a required clearance (c) for the vehicle wheel (12).

8. Arrangement in particular according to any of the preceding claims, **characterised in that** the driven lever (41) of the stabiliser part (43) is configured as an additional spring element, for example as a leaf spring.

## Revendications

1. Aménagement d'un stabilisateur (44) formé en deux parties sur une suspension de roue d'un véhicule automobile, les parties (43) du stabilisateur pouvant tourner dans le même sens ou en sens contraire respectivement au moyen d'une unité de moteur/transmission (46) correspondante, dans lequel aménagement chaque partie (43) du stabilisateur présente une barre de torsion externe (49) cylindrique creuse, dont l'extrémité côté transmission (45) est reliée à une sortie de transmission (50a) et dont l'extrémité distante de la transmission est reliée opérationnellement à une barre de torsion interne (47) guidée par la barre de torsion externe (49) cylindrique creuse de son extrémité côté transmission (45), ladite barre de torsion (47) étant reliée directement ou indirectement à un levier d'entraînement (41) qui est articulé sur un élément de suspension de roue (16), **caractérisé en ce que** la transmission (50) de l'unité de moteur/transmission (46) est aménagée avec sa sortie de transmission (50a) dans la direction transversale (y) du véhicule entre le moteur de commande (48) et le levier d'entraînement (41).

2. Aménagement selon la revendication 1, **caractérisé en ce que** le moteur de commande (48) et la transmission (50) sont aménagés respectivement coaxialement par rapport à l'axe de torsion de la partie (43) du stabilisateur et/ou la partie (43) du stabilisateur est guidée par la transmission (50) et le moteur de commande (48).

3. Aménagement selon la revendication 1 ou la revendication 2, **caractérisée en ce que** la barre de torsion interne (47) est reliée opérationnellement, à son extrémité guidée par la barre de torsion externe (49) cylindrique creuse à une barre de torsion externe (51) cylindrique creuse renvoyée dans la direction de la transmission (50), laquelle barre de torsion (51) porte le levier d'entraînement (41).

4. Aménagement selon la revendication 1, 2 ou 3, **caractérisée en ce que** la partie (43) du stabilisateur est montée à rotation sur un palier (53) dans la zone de la transition avec le levier d'entraînement (41).

5. Aménagement selon la revendication 4, **caractérisé en ce que** le palier (53) est formé directement dans un boîtier de l'unité moteur/transmission (46).

6. Aménagement selon l'une quelconque des revendications 3, 4 ou 5, **caractérisé en ce que** la partie (43) du stabilisateur est prolongée d'une longueur de saillie (b) dans la direction transversale (y) du véhicule dans la direction de la roue (12) du véhicule via le levier d'entraînement (41).

7. Aménagement selon la revendication 6, **caractérisé en ce que** la longueur de saillie (b) de la partie (43) du stabilisateur correspond à la distance entre le levier d'entraînement (41) et la roue (12) du véhicule dans sa position neutre déduction faite d'un espace libre (c) nécessaire pour la roue (12) du véhicule.

8. Aménagement en particulier selon l'une quelconque des revendications précédentes, **caractérisé en ce que** le levier d'entraînement (41) de la partie (43) du stabilisateur est conformé en élément élastique supplémentaire, quelque chose comme un ressort à lames.
